# EUROPÄISCHE PATENTSCHRIFT

(11) **EP 4 343 227 B1**
(45) Veröffentlichungstag und Bekanntmachung des Hinweises auf die Patenterteilung: **04.06.2025**
(21) Anmeldenummer: 23195890.1
(22) Anmeldetag: 07.09.2023
(51) Int. Cl.: F24S 25/636, H02S 20/00, F16B 2/12, F16B 5/00

(54) **BEFESTIGUNGSKLEMME**
FASTENING CLAMP
PINCE DE FIXATION

(30) Priorität: 23.09.2022 DE 202022105355 U
(43) Veröffentlichungstag der Anmeldung: 27.03.2024
(73) Patentinhaber: OBO Bettermann Hungary Kft., 2347 Bugyi (HU)
(72) Erfinder: Bence, Istvan Dobozi, 2310 Szigetszentmiklos (HU)
(74) Vertreter: Haverkamp Patentanwälte PartG mbB

(56) Entgegenhaltungen:
- EP-B1- 3 040 640
- DE-U1- 202011 107 843
- US-A1- 2022 060 143
- US-B2- 10 340 837

## Beschreibung

Die Erfindung betrifft eine Befestigungsklemme zum Befestigen eines Paneels, etwa eines Photovoltaik-Moduls an einem Träger mit den weiteren Merkmalen des Oberbegriffs des Anspruchs 1.

Es gibt zahlreiche Anwendungen, bei denen plattenförmige Bauteile - Paneele - an einem Träger zu befestigen sind. Einer dieser Anwendungen ist die Befestigung von Photovoltaik-Modulen an einem aus mehreren Trägern bereitgestellten Tragegerüst. Befestigt werden Photovoltaik-Module an solchen Trägern mit Befestigungsklemmen. Diese werden seitlich zu dem zu befestigenden Paneel angeordnet und dienen dem Zweck, ein solches Paneel mit dem Träger zu verspannen. Zu diesem Zweck verfügt eine solche Befestigungsklemme über ein Anschlussteil. Das Anschlussteil trägt ein oder mehrere Anschluss-organe zum Anschließen des Anschlussteils und damit der Befestigungsklemme an einen solchen Träger. Die Anschlussorgane können ausgebildet sein, um den oberen Abschluss eines Trägers außenseitig zu umfassen, beispielsweise den oberen Gurt eines I-Trägers. Gemäß einer anderen Ausgestaltung sind die Anschlussorgane ausgebildet, damit diese in eine der Längserstreckung des Trägers folgende Nut eingebracht werden können. In beiden Fällen sind die Anschlussorgane ausgelegt, den Träger mit ihren Anschlussorganen klauenartig zu hintergreifen. Ist das Anschlussteil einer solchen Befestigungsklemme an einen Träger angeschlossen, ist durch das klauenartige Hintergreifen ein trägerseitiges Spannwiderlager bereitgestellt.

Neben dem Anschlussteil verfügt eine solche Befestigungsklemme über ein Klemmelement. Dieses ist in Spannwirkrichtung der Befestigungsklemme gegenüber dem Anschlussteil einrichtbar und damit verstellbar. Das Klemmelement umfasst einen Klemmschenkel mit einem daran angeformten Klemmfortsatz. Der Klemmfortsatz dient zum Übergreifen des oberen seitlichen Randes eines auf den Träger aufgelegten Paneels und bildet damit das mit dem trägerseitigen Spannwiderlager zusammenwirkende paneelseitige Spannwiderlager zum Befestigen eines solchen Paneels an dem Träger. Für die Bereitstellung des paneelseitigen Widerlagers mit dem Klemmfortsatz ist eine flächige Anlage gewünscht. Angeformt an den Klemmschenkel ist ferner ein Stützschenkel. Dieser erstreckt sich in Spannwirkrichtung und bildet mit dem Klemmschenkel ein Winkelstück. Der Stützschenkel dient zum Abstützen des Klemmelementes an dem Anschlussteil, um beim Spannen des Klemmelementes gegen das Anschlussteil bei auf der Oberseite des Paneels abgestütztem Klemmfortsatz ein Verkippen des Klemmschenkels mit seinem Klemmfortsatz zu unterbinden. Zu diesem Zweck verfügt das Anschlussteil über ein Stützwiderlager, auf dem der Stützschenkel des Klemmelementes beim Spannen der Befestigungsklemme abgestützt ist.

Als Spanneinrichtung dient bei einer solchen Befestigungsklemme zumeist ein Spannbolzen, der mit einer Spannmutter zusammenwirkt. Der Spannbolzen durchgreift den Klemmschenkel des Klemmelementes und kämmt ein dem Anschlussteil zugeordnetes Innengewinde, welches die Spannmutter bildet.

Eine Befestigungsklemme, wie vorstehend beschrieben, ist beispielsweise aus DE 20 2011 107 843 U1 oder EP 3 040 640 B1 bekannt. Das Stützwiderlager des Anschlussteils ist in beiden Fällen durch eine Zahnreihe bereitgestellt, in die eine an der Innenseite des Stützschenkels des Klemmelementes angeformte komplementäre Zahnreihe eingreift. Durch die Bereitstellung eines solchen Stützwiderlagers und der entsprechenden Abstützung des Stützschenkels daran ist eine Einrichtung des Abstandes zwischen dem Klemmfortsatz des Klemmelementes und dem Anschlussteil möglich. Mit einer solchen Befestigungsklemme lassen sich Photovoltaik-Module unterschiedlicher Höhe (Dicke) an einem Träger befestigen, wobei durch die Einrichtbarkeit zwischen Klemmelement und Anschlussteil die gewünschte Raumlage des Klemmelementes mit seinem Klemmfortsatz gegenüber der Oberseite des Photovoltaik-Moduls in seiner bestimmungsgemäßen Raumlage verbleibt. Infolge der Abstützung des Klemmelementes über seinen Stützschenkel auf der Abstützung des Anschlussteils ist ein Verkippen des Klemmelementes unterbunden.

Bei den vorstehend angesprochenen Befestigungsklemmen sind die einzelnen Bestandteile stranggepresste Profilabschnitte. Zwar lassen sich auf diese Weise die vorstehend beschriebenen Strukturen bereitstellen. Werden Strukturen benötigt, die nicht in Strangpressrichtung eines Bauteils verlaufen, muss hierfür entweder ein eigenes Bauteil bereitgestellt oder diese Strukturen müssen durch nachträgliche Bearbeitung erstellt werden. Ferner muss bei einer Montage derartiger Befestigungsklemmen beim Spannen auf eine bestimmungsgemäße Anordnung des Klemmelementes in seiner Raumlage aufgrund der geringen Eingriffstiefe der Zahnung des Stützschenkels in die als Spannwiderlager vorgesehene Zahnung des Anschlussteils geachtet werden. Die aus DE 202011 107 843 U1 vorbekannte Befestigungsklemme lässt sich infolge seiner den oberen Gurt eines Trägers umgreifenden Anschlussorgane nur in einer einzigen Orientierung an dem Träger anbringen. Die Befestigungsklemme gemäß EP 3 040 640 B1 verfügt neben dem Klemmelement und dem Anschlussteil über ein weiteres Element, welches bei dieser Ausgestaltung das Stützwiderlager trägt. Hierbei handelt es sich um ein Winkelstück, welches mit seinem oberen zu dem Klemmelement weisenden Schenkeln das Anschlussteil übergreift.

Ausgehend von diesem diskutierten Stand der Technik liegt der Erfindung daher die Aufgabe zugrunde, eine Befestigungsklemme vorzuschlagen, die sich nicht nur durch eine geringe Anzahl an Einzelelementen auszeichnet, sondern zudem geeignet ist, in einfacher und kostengünstiger Weise hergestellt werden zu können und die darüber hinaus geeignet ist, universeller eingesetzt werden zu können, um in unterschiedlichen Befestigungssituationen verwendet werden zu können.

Gelöst wird diese Aufgabe erfindungsgemäß durch eine eingangs genannte, gattungsgemäße Befestigungsklemme mit den weiteren Merkmalen des Anspruchs 1.

Das Anschlussteil dieser Befestigungsklemme stellt als Stützwiderlager zwei Stützwiderlagerschenkel mit ihren voneinander beabstandeten Abstützflächen eine Zweipunktabstützung für den Stützschenkel des Klemmelementes bereit. Die Stützwiderlagerschenkel sind durch einen Materialstreifen miteinander verbunden. Die Stützwiderlagerschenkel sind Teil eines Schenkels des Anschlussteils, an den in Querrichtung zu diesem ein Spannwiderlagerschenkel angeformt ist. Das Anschlussteil bildet daher mit seinen winklig zueinander angeordneten Schenkeln - dem die Stützwiderlagerschenkel tragenden Schenkel und dem Spannwiderlagerschenkel - ein Winkelstück. Auf den Spannwiderlagerschenkel wirkt beim Verspannen des Klemmelementes mit dem Anschlussteil das Spannmittel. Die Abstützflächen der beiden Stützwiderlagerschenkel sind durch eine in die freie, nach außen weisende Stirnfläche derselben eingebrachte Kontur bereitgestellt. Ein solches Anschlussteil lässt sich aus einer Blechplatine als Stanzbiegeteil herstellen, ausgehend von einer Platine, typischerweise aus rostfreiem Stahl. Die Abstützflächen und der Stützschenkel sind ausgeführt, damit der Stützschenkel des Klemmelementes bei einem Verspannen desselben gegenüber dem Anschlussteil auf den Abstützflächen abgestützt ist. Auch das Klemmelement mit seinem Stützschenkel ist vorzugsweise ein Stanzbiegeteil, vorzugsweise aus demselben Material wie das Anschlussteil. Um eine verlässliche Abstützung des Abstützschenkels an dem Stützwiderlager des Anschlussteils zu gewährleisten, ist in einem Ausführungsbeispiel vorgesehen, dass freie Ende des Stützschenkels, mit dem dieser auf den Abstützflächen abgestützt ist, in Richtung zu dem die Stützwiderlagerschenkel verbindenden Materialstreifen und damit zum Anschlussteil hin abzuwinkeln. Eine Zweipunktabstützung ist vorteilhaft, da dann auch bei in Kauf zu nehmenden Herstellungstoleranzen der Klemmschenkel über seinen Stützschenkel definiert und, ohne ein Verkippen in der Stützstellung in Kauf nehmen zu müssen, an dem Anschlussteil bei einem Verspannen von Klemmelement mit Anschlussteil abgestützt ist. Um eine Querfixierung der Abstützung des Stützschenkels an dem Stützwiderlager des Anschlussteils zu gewährleisten, ist in einer Weiterbildung vorgesehen, dass zwischen den Endabschnitten, mit denen der Stützschenkel auf den Abschlussflächen abgestützt ist, ein den Stützschenkel verlängernder Fortsatz angeformt ist, der sodann in den Abstandsraum zwischen die Stützwiderlagerschenkel greift.

Der Schenkel des Anschlussteils trägt ferner an seinem von dem Klemmelement wegweisenden Ende zumindest ein Anschlussorgan zum Anschließen des Anschlussteils an einen Träger. Vorzugsweise befindet sich das zumindest eine erste Anschlussorgan an dem diesbezüglichen Ende eines Stützwiderlagerschenkels. Zweckmäßigerweise trägt jeder Stützwiderlagerschenkel endseitig ein solches Anschlussorgan. Ist das Anschlussorgan durch einen Endabschnitt eines Stützwiderlagerschenkels bereitgestellt, ist dieses vorzugsweise über eine Konturierung der nach außen weisenden Stirnfläche des Stützwiderlagerschenkels hinsichtlich seiner Umrissgeometrie bereitgestellt, sodass auch dieses ohne Weiteres im Wege eines Stanz-Biege-Prozesses hergestellt werden kann. Bei einem derartigen Anschlussorgane handelt es sich typischerweise um einen nach außen abragenden Nocken beziehungsweise Haken, vorgesehen zum Montieren des Anschlussteils an einem eine Befestigungsnut aufweisenden Träger.

Ein solches Anschlussteil kann ohne Weiteres auch an ein Hohlkammerprofil angeschlossen werden, in welches an seiner Befestigungsseite ein Langloch eingebracht ist. Zur Versteifung des Umrisses eines solchen Langloches kann dieses eine nach innen gerichtete Bördelung aufweisen. Ein eine Befestigungsnut aufweisender Träger kann zur Versteifung der Mündung einer Montagenut jeweils einen in die Montagenut gerichteten Versteifungsschenkel aufweisen.

Das Anschlussteil einer solchen Befestigungsklemme kann bezüglich seiner Stützwiderlagerschenkel an seiner in radialer Richtung nach außen weisenden Stirnfläche auch dergestalt konturiert sein, dass hierdurch mehrere, in Spannwirkrichtung voneinander beabstandete Abstützflächen bereitgestellt sind. Bei einer solchen Auslegung wird durch diese in Spannwirkrichtung voneinander beabstandeten Abstützflächen die Möglichkeit geschaffen, dass in Abhängigkeit von der Dicke eines an einem Träger zu befestigenden Paneels der Stützschenkel des Klemmelementes entsprechend der Dicke des Paneels an dem Stützwiderlager des Anschlussteils abgestützt werden kann. Die Spannwirkrichtung ist diejenige Richtung, in der das Klemmelement gegenüber dem Anschlussteil verspannt wird. Eine solche Konturierung der Stützwiderlagerschenkel braucht nicht besonders feinstufig ausgelegt zu werden mit dem Zweck, eine möglichst feingliedrige beziehungsweise fast stufenlose Abstützung des Stützschenkels des Klemmelementes an dem Stützwiderlager des Anschlussteils zu gewährleisten. Dieses ist bei der erfindungsgemäßen Befestigungsklemme nicht erforderlich, da die Dicke von an dem Träger zu befestigenden Paneelen nicht beliebig sondern genormt sind, diese jedenfalls mit nur bestimmten Dicken angeboten werden, insbesondere wenn es sich hierbei um Photovoltaik-Module handelt. Diesen Aspekt macht man sich bei der erfindungsgemäßen Befestigungsklemme zunutze, um Raum zu schaffen, damit auch bei in Spannwirk-richtung voneinander beabstandeten Abstützflächen der Stützschenkel des Klemmelementes mit seinem Stützabschnitt relativ tief in die die Abstützflächen bereitstellende Kontur eingreifen kann. Bei diesen Konturen handelt es sich um Einschnitte, vorzugsweise asymmetrisch, sodass in einer Seitenansicht die Stützwiderlagerschenkel eine sägezahnartige Kontur aufweisen. Dabei stellt die von dem Spannwiderlagerschenkel entferntere Flanke einer solchen Kontur die jeweilige Abstützfläche dar.

Bei einer Ausgestaltung, bei der an beiden Stützwiderlagerschenkeln jeweils ein Anschlussorgan angeformt ist, sind diese gemäß einem Ausführungsbeispiel parallel zueinander verlaufend angeordnet, um einen sicheren Hintergriff in einer Nut eines Trägers bereits bei relativ geringer Hintergriffstiefe zu erreichen. Demgegenüber sind die Stützwiderlagerschenkel des Schenkels winklig zueinander angeordnet, und zwar mit in radialer Richtung nach außen größer werdendem Abstand. Auf diese Weise ist die Spannweite und damit der Abstand der Abstützflächen der beiden Stützwiderlagerschenkel voneinander trotz geringem Materialeinsatz recht groß, wobei dennoch eine Abstützung des Stützschenkels relativ nah an einem als Spannbolzen eingesetzten Spannmittel erfolgen kann. Grundsätzlich ist selbstverständlich auch eine parallele Anordnung der Stützwiderlagerschenkel zueinander möglich.

Eine winklige Anordnung der Stützwiderlagerschenkel, zueinander wie vorstehend beschrieben, ist vor allem für eine Ausgestaltung der Befestigungsklemme zweckmäßig, bei der das Anschlussteil zwei Schenkel der vorstehend beschriebenen Art hat, die in Querrichtung zur Spannwirkrichtung voneinander beabstandet und durch den Spannwiderlagerschenkel des Anschlussteils miteinander verbunden sind. Ein solches Anschlussteil verfügt sodann über vier jeweils winklig zueinander angeordnete Stützwiderlager, typischerweise einen Winkel zwischen 80° und 100°, insbesondere 90° oder etwa 90° einfassend. Das Klemmelement kann bei einer solchen Ausgestaltung mit seinem Stützschenkel in vier verschiedenen Positionen, jeweils auf zwei Stützwiderlagerschenkel abgestützt werden. Bei einer solchen Ausgestaltung tragen typischerweise beide Schenkel endseitig jeweils Anschlussorgane, die aufgrund der Beabstandung der Schenkel clipsartig in eine Nut eines Trägers unter Ausnutzung der Materialelastizität eingesetzt werden können.

Eine Auslegung der Befestigungsklemme, bei der das Klemmelement in unterschiedlichen Positionen an das Anschlussteil angeschlossen werden kann, erlaubt eine Auslegung dieser Befestigungsklemme, dass das Klemmelement zusätzlich zu dem seinem Stützschenkel gegenüberliegenden Klemmfortsatz weitere Klemmfortsätze trägt. Diese verlaufen in Querrichtung zu der Erstreckung des Klemmschenkels zwischen seinem Stützschenkel und dem ersten Klemmfortsatz. Durch diese beiden weiteren, einander bezüglich des Klemmschenkels gegenüberliegenden Klemmfortsätze kann diese Befestigungsklemme auch als Mittelklemme eingesetzt werden, durch die sodann zwei benachbart zueinander angeordnete Paneele gemeinsam an einem Träger festgelegt werden können. Der Klemmschenkel überragt dann mit jeweils einem solchen weiteren Klemmfortsatz die Oberseite eines Paneels. Bei einer solchen Verwendung dieser Befestigungsklemme ist eine Abstützung des Klemmelementes durch seinen Stützschenkel an dem Anschlussteil nicht erforderlich und auch nicht gewünscht. Ein Verkippen des Klemmschenkels im Zuge des Verspannens des Klemmelementes gegenüber dem Anschlussteil ist unterbunden, da das Klemmelement durch die beiden einander gegenüberliegenden Klemmfortsätze paneelseitig abgestützt ist. Um einen Eingriff des Stützschenkels in ein Stützwiderlager des Anschlussteils bei einer solchen Verwendung der Befestigungsklemme zu verhindern, sind die Kontaktflächen, mit denen die beiden einander gegenüberliegenden Klemmfortsätze auf der Oberseite jeweils eines Paneels anliegen, gemäß einer ersten Ausgestaltung gegenüber der Ebene des Klemmschenkels geneigt, und zwar in Richtung zum Stützschenkel hin mit größer werdendem Abstand von dem von einem Spannmittel durchgriffenen Klemmschenkel.

Ist zusätzlich zu dem Klemmschluss, mit dem die Befestigungsklemme mit ihren Klemmfortsätzen des Klemmelementes auf die Oberseite des Paneels wirkt, ein gewisser Formschluss gewünscht, können die Eckausbildungen der typischerweise mit einem rechteckförmigen Grundriss ausgeführten Klemmfortsätze eckenverprägt sein, wodurch die zum Anschlussteil weisende Ecke ausgestellt ist und eine Eindrückkralle bildet. Beim Spannen der Befestigungsklemme zum Befestigen eines Paneels, etwa eines Photovoltaik-Moduls an einem Träger drücken sich diese in den umlaufenden Rahmen eines solchen Moduls ein. Eine solche Befestigung ist insbesondere dann zweckmäßig, wenn der Träger mit einem solchen Modul Vibrationen ausgesetzt ist, etwa wenn diese Einrichtung auf einem Schiff montiert ist.

Als Spanneinrichtung wird typischerweise ein Spannbolzen eingesetzt. Dieser durchgreift den Klemmschenkel und wirkt mit einer dem Anschlussteil zugeordneten Spannmutter als weiterer Bestandteil der Spanneinrichtung zusammen. Eine solche Spannmutter kann mit dem Anschlussteil geformt sein. In einem solchen Fall weist der Anschlussschenkel des Anschlussteils einen zu einer Hülse umbördelten Durchzug auf, in dem ein dem Spannbolzen komplementäres Innengewinde eingeschnitten ist. In einer anderen Ausgestaltung ist der zumindest eine an den Spannwiderlagerschenkel angeformte Schenkel des Anschlussteils in seinem Abschnitt zwischen dem Spannwiderlagerschenkel und den Stützwiderlagerschenkeln zur Ausbildung einer Spannmutteraufnahme geformt. Dieser Teil des Schenkels stellt gemäß einer Ausgestaltung einer solchen Befestigungsklemme eine Konterfläche bereit, an der eine handelsübliche Sechskantmutter als Spannmutter mit einer Schlüsselfläche anliegt oder nur mit geringem Abstand zu dieser angeordnet ist. Die Spannmutter ist in der Spannmutteraufnahme daher drehfest angeordnet. Gehalten ist die Spannmutter in der Spannmutteraufnahme durch den darin eingefädelten Spannbolzen. Bei einer Auslegung der Befestigungsklemme mit einem Anschlussteil mit zwei Schenkeln, weisen typischerweise beide Schenkel eine solche Ausformung zum Bereitstellen einer Spannmutteraufnahme auf.

Nachfolgend ist die Erfindung anhand eines Ausführungsbeispiels unter Bezugnahme auf die beigefügten Figuren beschrieben. Es zeigen:
- **Fig. 1:**: eine perspektivische Ansicht nach Art einer Explosionsdarstellung einer erfindungsgemäßen Befestigungsklemme,
- **Fig. 2:**: die in Figur 1 gezeigte Befestigungsklemme in ihrem Zu\sammenbau aus einer anderen Perspektive,
- **Fig. 3:**: die Befestigungsklemme der Figur 2 in der Perspektive der Explosionsdarstellung der Figur 1,
- **Fig. 4:**: eine Ansicht von unten auf die Befestigungsklemme der vorstehenden Figuren,
- **Fig. 5:**: die Befestigungsklemme der vorstehenden Figuren in einer beispielhaften Anwendung zum Befestigen eines Photovoltaik-Moduls an einem parallel zum Rand des Moduls verlaufenden Träger,
- **Fig.** 6:: die Befestigungsklemme der vorstehenden Figuren in einer beispielhaften Anwendung zum Befestigen eines Photovoltaik-Moduls an einem rechtwinklig zum Rand des Moduls verlaufenden Träger,
- **Fig. 7:**: die Befestigungsklemme der vorstehenden Figuren zum Befestigen zweier benachbart zueinander angeordneter Photovoltaik-Module an einem Träger,
- **Fig. 8:**: eine Seitenansicht der Befestigungsklemme der Figur 7 in ihrer Spannstellung und
- **Fig. 9:**: eine erfindungsgemäße Befestigungsklemme in einer Seitenansicht gemäß einer weiteren Ausgestaltung.

Eine Befestigungsklemme 1 dient zum Befestigen eines Paneels, beispielsweise eines Photovoltaik-Moduls an einem Träger. Die Befestigungsklemme 1 umfasst ein trägerseitiges Anschlussteil 2, ein Klemmelement 3 sowie als Spanneinrichtung einen Spannbolzen 4 mit einer handelsüblichen Mutter als Spannmutter 5, mit der das Klemmelement 3 gegenüber dem Anschlussteil 2 verspannt werden kann. Das Anschlussteil 2 des dargestellten Ausführungsbeispiels verfügt über zwei Schenkel 6, 6.1, die durch einen Spannwiderlagerschenkel 7 miteinander verbunden sind. Die Schenkel 6, 6.1 sind parallel zueinander und mit Abstand voneinander an den Spannwiderlagerschenkel 7 angeformt. Beide Schenkel 6, 6.1 sind spiegelsymmetrisch bezüglich der zwischen den beiden Schenkeln 6, 6.1 befindlichen Mittellängsebene des Anschlussteils 2 zueinander ausgeführt. In einer Seitenansicht ist das Anschlussteil 2 mit Blick auf die Beabstandung der beiden Schenkel 6, 6.1 etwa U-förmig ausgeführt. Im Folgenden ist der Schenkel 6 näher beschrieben. Dieselben Ausführungen gelten gleichermaßen für den Schenkel 6.1.

Der Schenkel 6 trägt zwei Stützwiderlagerschenkel 8, 8.1. Diese Schenkel 8, 8.1 erstrecken sich mit ihrer ebenen Erstreckung in Spannwirkrichtung, mithin in derjenigen Richtung, in der eine Verspannung des Klemmelementes 3 gegenüber dem Anschlussteil 2 erfolgt. Teil des Schenkels 6 sind an seinem unteren Abschluss ebenfalls zwei Anschlusshaken 9, 9.1 als Anschlussorgane. Bei dem dargestellten Ausführungsbeispiel sind diese Teil des jeweiligen Stützwiderlagerschenkels 8 beziehungsweise 8.1. Die beiden Stützwiderlagerschenkel 8, 8.1 sind durch einen Materialstreifen 10 miteinander verbunden. Der Materialstreifen 10 ist mit einer konkaven Innenseite und einer konvexen Außenseite gekrümmt ausgeführt. Auf diese Weise wird Raum für den Eingriff des Gewindeschaftes 11 des Spannbolzens 4 bereitgestellt. Die beiden Anschlusshaken 9, 9.1 sind parallel zueinander hinsichtlich ihrer flächigen Erstreckung angeordnet. Ihre nach oben weisende Fläche 12, 12.1 dient als Widerlagerfläche, wenn das Anschlussteil 2 in eine Befestigungsnut eines Trägers eingesetzt ist. Dann hintergreifen die Anschlusshaken 9, 9.1 und damit ihre Widerlagerflächen 12, 12.1 die Öffnung einer in einem Träger befindlichen Befestigungsnut oder einer darin eingebrachten Öffnung. Die Stützwiderlagerschenkel 8, 8.1 sind demgegenüber winklig zueinander angeordnet, und zwar in radialer Richtung nach außen mit größer werdendem Abstand voneinander. Der von den beiden Stützwiderlagerschenkeln 8, 8.1 eingeschlossene Winkel beträgt bei dem dargestellten Ausführungsbeispiel 90°. Jeder Stützwiderlagerschenkel 8, 8.1 verfügt über eine Konturierung seiner radial nach außen weisenden Stirnfläche zur Ausbildung von mehreren Abstützflächen 13. Diese sind als Einschnitte in diese Stirnfläche ausgeführt. Die Einschnitte sind asymmetrisch, wobei jeweils die untere, von dem Spannwiderlagerschenkel 7 weiter beabstandete Flanke eines solchen Einschnittes eine Abstützfläche 13 bildet. Diese sind in radiale Richtung nach innen hin in Richtung von dem Klemmelement 3 weg mit einer geringen Neigung ausgeführt.

Zwischen dem Spannwiderlagerschenkel 7 und den Stützwiderlagerschenkeln 8, 8.1 verfügt der Schenkel 6 über eine Ausformung zum Bereitstellen einer Spannmutteraufnahme 14. Dabei dient der an den Spannwiderlagerschenkel 7 angeformte Schenkelabschnitt 15 mit seiner Innenseite als Konterfläche für eine Werkzeugangriffsfläche 16 der Spannmutter 5. Der Abstand der Schenkelabschnitte 15 der beiden Schenkel 6, 6.1 ist so bemessen, dass die Spannmutter 5 in die Spannmutteraufnahme 14 nur in einer solchen Stellung eingesetzt werden kann, in der zwei einander gegenüberliegende Werkzeugangriffsflächen 16 etwa parallel zu den durch die Schenkelabschnitte 15 bereitgestellten Konterflächen angeordnet sind.

In den Spannwiderlagerschenkel 7 ist eine Durchbrechung 17 eingebracht, durch die der Gewindeschaft 11 des Spannbolzens 4 hindurchgeführt ist. Die Umrissgeometrie der Durchbrechung 17 ist kreisförmig.

Das Anschlussteil 2 des dargestellten Ausführungsbeispiels ist als Stanzbiegeteil aus einer Stahlblechplatine hergestellt, vorzugsweise aus einer rostfreien Stahllegierung.

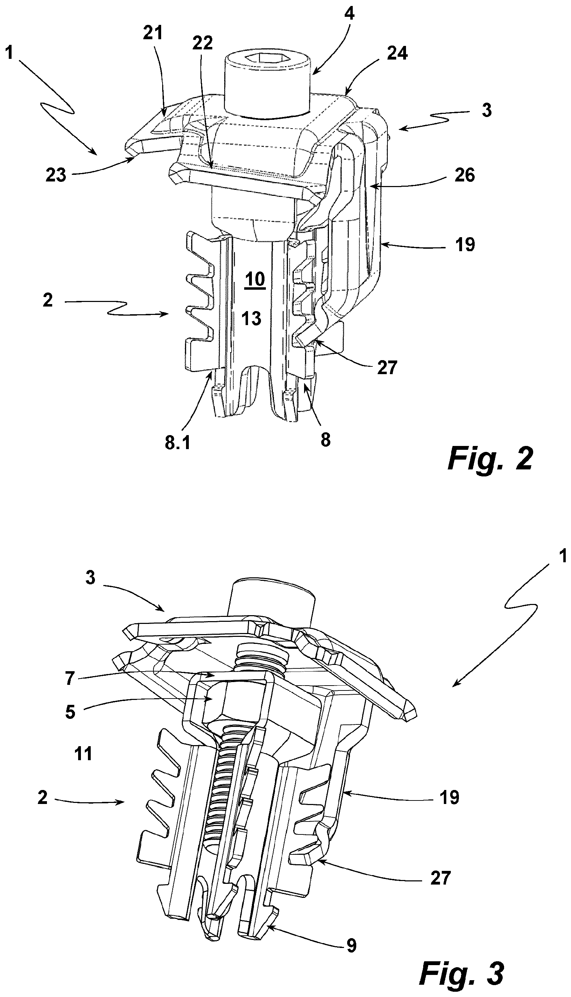

Das Klemmelement 3 ist ebenso wie das Anschlussteil 2 ein Stanzbiegeteil aus einer rostfreien Stahllegierung. Das Klemmelement 3 verfügt über einen Klemmschenkel 18 und einen winklig daran angeformten Stützschenkel 19. In den Klemmschenkel 18 ist eine Durchbrechung 20 für den Durchgriff des Gewindeschaftes 11 des Spannbolzens 4 eingebracht. Angeformt an den Klemmschenkel 18 sind bei dem dargestellten Ausführungsbeispiel drei Klemmfortsätze 21, 22, 22.1. Der Klemmfortsatz 21 ist an den Klemmschenkel 18 an seiner dem Stützschenkel 19 gegenüberliegenden Seite angeformt. Die Klemmfortsätze 21, 22, 22.1 überragen die äußere Mantelfläche des Anschlussteils 2 und greifen bei einer Verwendung der Befestigungsklemme 1 zum Verspannen eines Paneels an einem Träger über die Oberseite des Paneels, also beispielsweise den Rahmen eines Photovoltaik-Moduls. Das Überragen des Klemmfortsatzes 21 des Klemmelementes 3 über die äußere Begrenzung des Anschlussteils 2 ist aus der perspektivischen Darstellung der Befestigungsklemme 1 in Figur 2 deutlich erkennbar. Entsprechendes gilt für die Klemmfortsätze 22 und 22.1. Der Klemmfortsatz 21 ist gegenüber der Ebene des Klemmschenkels 18 in Richtung zu dem zu verspannenden Paneel geneigt. Der Klemmfortsatz 21 weist eine rechteckförmige Umrissgeometrie auf. Seine freien Eckbereiche sind, wie besonders deutlich in Figur 2 zu erkennen, verprägt, um nach unten und somit in Richtung zum Anschlussteil 2 hin weisende Eindrückkrallen 23 bereitzustellen. Der Klemmschenkel 18 ist auch im Übergang zu seinen Klemmfortsätzen 21, 22, 22.1 durch eine darin eingeprägte Sicke 24 versteift.

Die beiden weiteren Klemmfortsätze 22, 22.1 sind einander in Bezug auf den von dem Spannbolzen 4 durchgriffenen Klemmschenkel 18 gegenüberliegend angeordnet und übergreifen das Anschlussteil 2 in Querrichtung zu der Richtung, in der der Klemmfortsatz 21 das Anschlussteil 2 übergreift. Die Klemmfortsätze 22, 22.1 sind prinzipiell ebenso konzipiert wie der Klemmfortsatz 21. Die Klemmfortsätze 22, 22.1 weisen ebenso wie der Klemmfortsatz 21 unterseitig einen Kontaktflächenbereich 25, 25.1 auf, mit dem diese zum Verspannen eines Paneels an dessen Oberseite anliegen.

Von Besonderheit bei den Klemmfortsätzen 22, 22.1 ist, dass die Kontaktflächenbereiche 25, 25.1 nicht parallel zur Ebene des Klemmschenkels 18 ausgerichtet sind, sondern gegenüber der Ebene des Klemmschenkels 18 geneigt ist, und zwar in Richtung zu dem Stützschenkel 19 hin (siehe Figur 2). Damit vergrößert sich der Abstand der Kontaktfläche 25, 25.1 in dieser Richtung von der Ebene des Klemmschenkels 18. Die Kontaktfläche des Klemmfortsatzes 21 verläuft hingegen parallel zur Ebene des Klemmschenkels 18.

Der Stützschenkel 19 erstreckt sich in Spannwirkrichtung. Zum Versteifen dieses Abschnittes dient eine darin eingebrachte Sicke 26. Der untere Endabschnitt des Stützschenkels 19 ist in Richtung zu dem Anschlussteil 2 bzw. zu dem die Stützwiderlagerschenkel 8, 8.1 verbindenden Materialstreifen 10 hin abgewinkelt. Dieser Abschnitt stellt den Stützabschnitt 27 des Stützschenkels 19 dar, dessen freies Ende zum Abstützen des Klemmelementes 3 an dem durch das Anschlussteil 2 durch die Abstützflächen 13 bereitgestellten Spannwiderlager bei einer Verwendung der Befestigungsklemme zum Verspannen eines Paneels mit dem Klemmfortsatz 21 abgestützt ist. Figur 2 zeigt die Abstützanordnung des Stützschenkels 19 mit seinem Stützabschnitt 27 an der untersten Abstützfläche 13 des Stützwiderlagerschenkels 8 und eine Abstützfläche eines Stützwiderlagerschenkels des anderen Schenkels 6.1. Soll mit der Befestigungsklemme 1 ein Paneel größerer Dicke an einem Träger verspannt werden, wird der Stützabschnitt 27 mit dem Stützwiderlager des Anschlussteils 2 an einem der in Spannwirkrichtung davon beabstandeten Abstützflächenpaare in Eingriff gestellt.

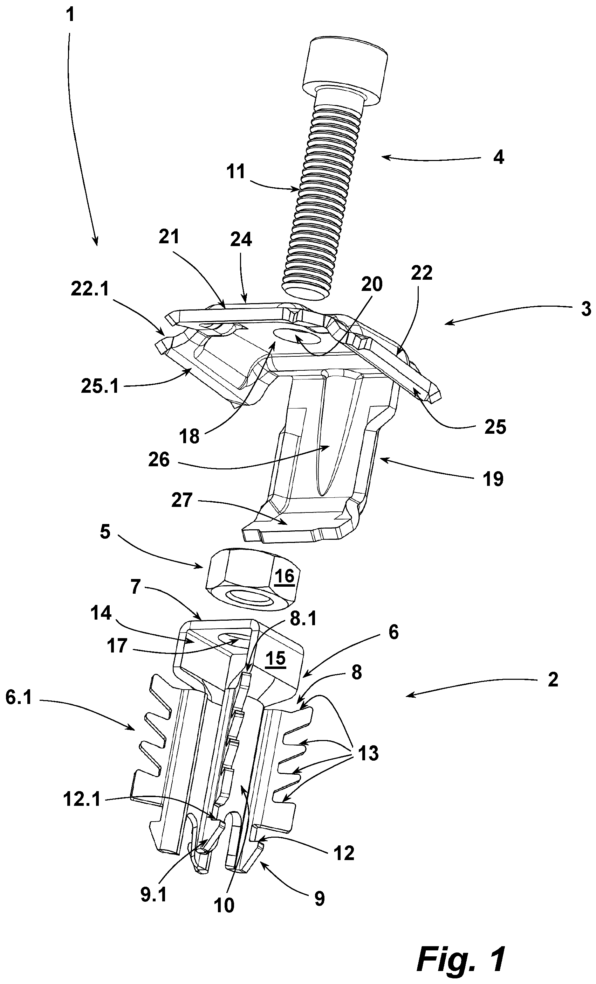

Figur 3 zeigt die Befestigungsklemme 1 in der Perspektive der Figur 1 im Zusammenbau. Die Anordnung der Spannmutter 5 innerhalb der Spannmutteraufnahme 14 ist darin deutlich zu erkennen. Der Gewindeschaft 11 des Spannbolzens 2 durchgreift die Durchbrechung 20 des Klemmschenkels 18 des Klemmelementes 3, die Durchbrechung 17 des Spannwiderlagerschenkels 7 und kämmt die Spannmutter 5.

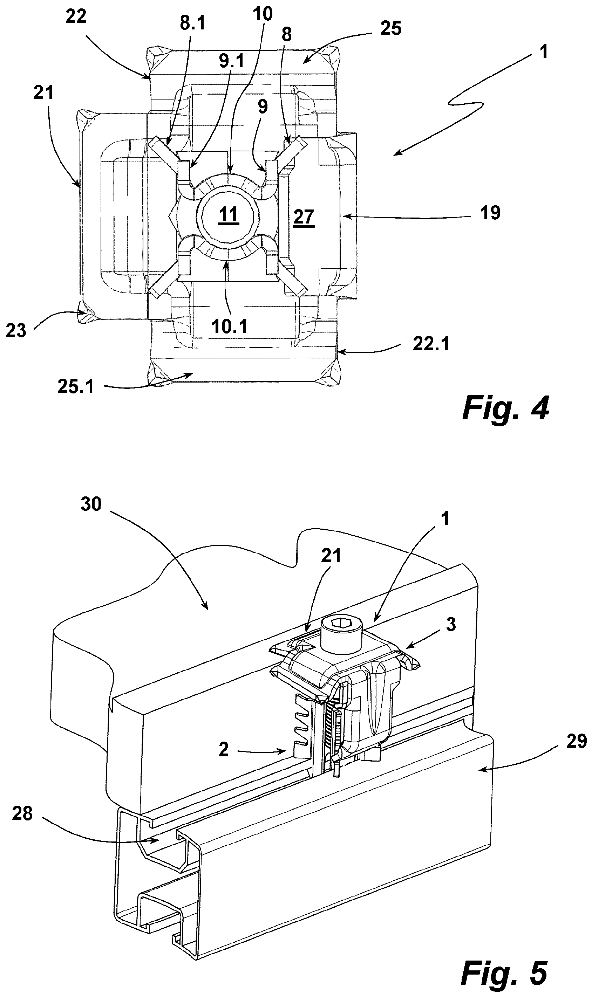

Die Ausrichtung der Stützwiderlagerschenkel 8, 8.1 sowie der Anschlusshaken 9, 9.1 des Schenkels 6 und die Anschlusshaken sowie die Stützwiderlagerschenkel des zweiten Schenkels 6.1 sind aus der Unteransicht der Befestigungsklemme 1 in Figur 4 zu erkennen. Dieses betrifft insbesondere die winklige Anordnung zueinander. Ferner ist die Raumlage der Anschlusshaken 9, 9.1 und ihre zueinander parallele Ausrichtung deutlich zu erkennen. Die Anschlusshaken 9, 9.1 weisen unterseitig eine Stellschräge auf. Diese dient dem Zweck einer erleichterten Einführung dieser als Anschlussorgan dienenden Anschlusshaken 9, 9.1 zusammen mit denjenigen des zweiten Schenkels 6.1 in eine Nut oder eine Öffnung eines Trägers. Die Unteransicht der Figur 4 macht ferner deutlich, dass der Abstand der beiden Schenkel 6, 6.1 mit ihrem jeweils gekrümmt ausgeführten Materialstreifen 10, 10.1 so bemessen ist, dass der Gewindeschaft 11 des Spannbolzens 4 innenseitig an den Materialstreifen 10, 10.1 anliegt. Angeschlossen wird die Befestigungsklemme 1 an einen Träger durch Einführen seiner Befestigungsorgane - hier: der Anschlusshaken 9, 9.1 der beiden Stützwiderlagerschenkel 8, 8.1 jedes Schenkels 6, 6.1 - in eine Nut oder eine Öffnung in einem Zustand der Klemme, bei der der Spannbolzen 4 sich noch nicht in seiner Spannsituation befindet, sondern beispielsweise mit seinem Gewindefuß nur in die Spannmutter 5 eintaucht. Dann weisen die beiden Schenkel 6, 6.1 die erforderliche materielle Elastizität auf, sodass diese unter Verringerung ihres Abstandes im Bereich ihrer Anschlussorgane in eine Nut oder Öffnung eines Trägers clipsartig eingesetzt werden können, sodass dann die Hakenabschnitte die Nut- bzw. Öffnungsrandbereiche des Trägers hintergreifen. Durch das Einschrauben des Gewindeschaftes 11 zwischen die Materialstreifen 10, 10.1 wird der Hintergriff der Anschlusshaken 9, 9.1 und damit den Anschluss an einen Träger gesichert.

Eine erste Paneelbefestigungsmöglichkeit unter Verwendung der Befestigungsklemme 1 ist in Figur 5 gezeigt. Eingesetzt in eine Montagenut 28 eines bei dem dargestellten Ausführungsbeispiel als Hohlkammerprofil ausgeführten Trägers 29 sind die Anschlusshaken 9, 9.1 sowie diejenigen des anderen Schenkels seines Anschlussteils 2. Der Klemmfortsatz 21 übergreift den Rand eines mit dem Träger 29 zu verspannenden Paneels 30. Bei dem Paneel 30 handelt es sich um ein Photovoltaik-Modul. Die Befestigungsklemme 1 befindet sich in der in Figur 2 dargestellten Spannposition. Über die Längserstreckung des Paneels 30 ist dieses mit mehreren seitlich zu diesem angeordneten Befestigungsklemmen 1 an dem parallel zu dem Rand des Photovoltaik-Moduls verlaufenden Träger 29 befestigt. Aufgrund der vorbeschriebenen Möglichkeit des Anschließens des Anschlussteils 2 der Befestigungsklemme 1 an einen solchen Träger 29 durch Einstecken seiner Anschlussorgane in eine Nut oder eine Öffnung ist es nicht erforderlich, die Befestigungsklemmen 1 seitlich in diesen einschieben zu müssen. Mithin kann dieser ohne Weiteres auch montiert werden, wenn stirnseitig oder an anderer Stelle ein solcher Montagekanal 28 verschlossen ist.

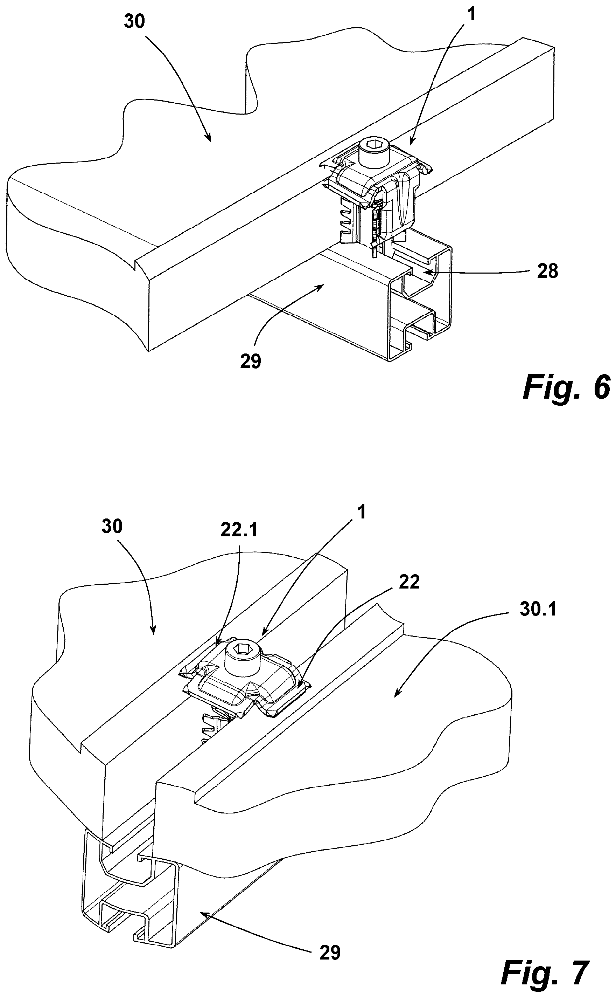

Figur 6 zeigt die Befestigung des Paneels 30 wiederum auf dem Träger 29, der in der gezeigten Position nicht parallel zum Rand des Paneels 30 sondern rechtwinklig dazu verläuft. Eine sichere Befestigung des Paneels 30 an den Träger 29 ist auch bei einem solchen Trägerverlauf gewährleistet.

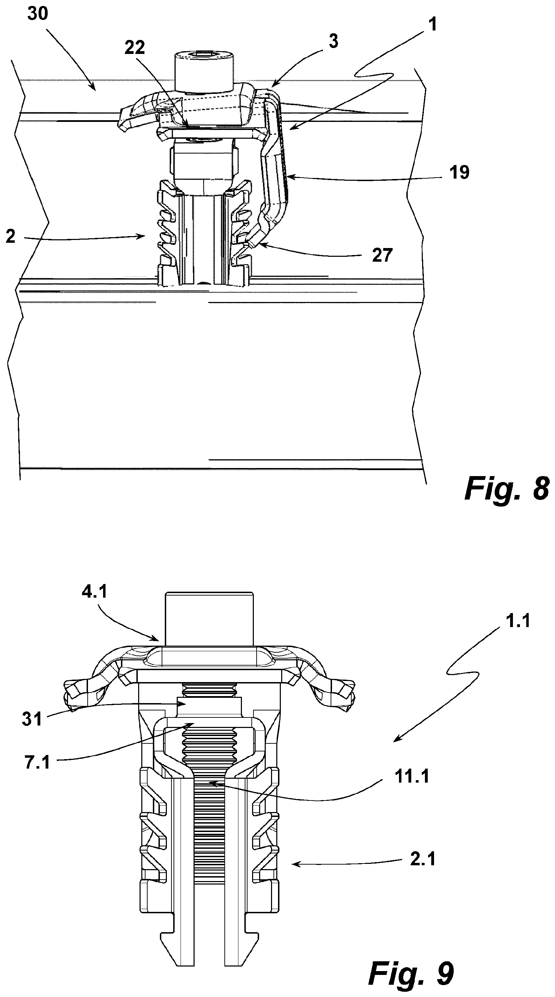

Die Klemmfortsätze 22, 22.1 der Befestigungsklemme 1 dienen dem Zweck, damit die Befestigungsklemme 1 nicht nur als Seitenabschlussklemme, wie in den Figuren 5 und 6 gezeigt, eingesetzt werden kann, sondern auch als Mittelklemme. Ein solcher Einsatz der Befestigungsklemme 1 ist in Figur 7 dargestellt. Als Mittelklemme übergreift das Klemmelement 3 mit jeweils einem Klemmfortsatz 22 bzw. 22.1 den Rand jeweils eines Paneels 30, 30.1. Auf diese Weise werden beide Paneele 30, 30.1 mit einer einzigen Befestigungsklemme 1 an einem Befestigungspunkt an dem Träger 29 befestigt bzw. mit diesem verspannt. Bei einer solchen Verwendung der Befestigungsklemme 1 wird der Eingriff des Stützschenkels 19 mit seinem Stützabschnitt 27 in ein Stützwiderlager des Anschlussteils 2 nicht benötigt. Schließlich ist ein Verkippen des Klemmelementes 3 bereits dadurch verhindert, dass dessen beide einander gegenüberliegende Klemmfortsätze 22, 22.1 jeweils auf der Oberseite eines Paneels 30, 30.1 gleicher Dicke (Höhe) abgestützt sind. Bei einer solchen Verwendung der Befestigungsklemme 1 kommen die geneigt konzipierten Kontaktflächen 25, 25.1 der Klemmfortsätze 22, 22.1 zum Tragen. Da sich diese an der Oberfläche des jeweils benachbarten Paneels 30 bzw. 30.1 anliegen, wird der Stützschenkel 19 mit seinem Stützabschnitt 27 von dem durch die Stützwiderlagerschenkel 8, 8.1 mit ihren Abstützflächen 13 bereitgestellten Stützwiderlager nach außen wegbewegt. Ein bestimmungsgemäßes Verspannen der beiden Paneele 30, 30.1 mit der Befestigungsklemme 1 ist daher nicht durch einen unabsichtlichen Eingriff des Stützabschnittes 27 des Klemmelementes 3 in das vom Anschlussteil 2 bereitgestellte Stützwiderlager blockiert. Figur 8 zeigt eine Seitenansicht der Befestigungsklemme 1 mit dem ausgeblendeten Paneel 30.1. Die nicht-Ineingriffstellung des Stützschenkels 19 mit seinem Stützabschnitt 27 in das Stützwiderlager des Anschlussteils 2 ist darin deutlich zu erkennen.

Figur 9 zeigt eine weitere Befestigungsklemme 1.1. Diese ist mit Ausnahme der Spannmutter genauso aufgebaut wie die Befestigungsklemme 1 der vorstehenden Figuren. Die diesbezüglichen Ausführungen gelten somit gleichermaßen für die Befestigungsklemme 1.1. Der Spannbolzen 4.1 kämmt mit seinem Gewindeschaft 11.1 nicht eine separate Spannmutter wie bei dem Ausführungsbeispiel der vorstehenden Figuren sondern eine hülsenartige Umbördelung 31 eines hülsenartigen Durchzuges des Spannwiderlagerschenkels 7.1 des Anschlussteils 2.1, in die wiederum ein Innengewinde eingeschnitten ist. Somit stellt bei diesem Ausführungsbeispiel die Gewindehülse 31 die mit dem Spannbolzen 4.1 zusammenwirkende Spannmutter dar.

Die Erfindung ist anhand von Ausführungsbeispielen beschrieben. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen näher erläutert werden müsste.

**Bezugszeichenliste**

| | | | |
|---|---|---|---|
| 1, 1.1 | Befestigungsklemme | 31 | Gewindehülse |
| 2, 2.1 | Anschlussteil | | |
| 3 | Klemmelement | | |
| 4 | Spannbolzen | | |
| 5 | Spannmutter | | |
| 6, 6.1 | Schenkel | | |
| 7, 7.1 | Spannwiderlagerschenkel | | |
| 8, 8.1 | Stützwiderlagerschenkel | | |
| 9, 9.1 | Anschlusshaken | | |
| 10, 10.1 | Materialstreifen | | |
| 11, 11.1 | Gewindeschaft | | |
| 12, 12.1 | Widerlagerfläche | | |
| 13 | Abstützfläche | | |
| 14 | Spannmutteraufnahme | | |
| 15 | Schenkelabschnitt | | |
| 16 | Werkzeugangriffsfläche | | |
| 17 | Durchbrechung | | |
| 18 | Klemmschenkel | | |
| 19 | Stützschenkel | | |
| 20 | Durchbrechung | | |
| 21 | Klemmfortsatz | | |
| 22,22.1 | Klemmfortsatz | | |
| 23 | Eindrückkralle | | |
| 24 | Sicke | | |
| 25, 25.1 | Kontaktflächenbereich | | |
| 26 | Sicke | | |
| 27 | Stützabschnitt | | |
| 28 | Montagenut | | |
| 29 | Träger | | |
| 30, 30.1 | Paneel | | |

## Patentansprüche

1. Befestigungsklemme zum Befestigen eines Paneels (30, 30.1), etwa eines Photovoltaik-Moduls an einem Träger (29), welche Befestigungsklemme (1, 1.1)
- ein Anschlussteil (2, 2.1) mit einem Anschlussorgan (9, 9.1) zum Anschließen der Befestigungsklemme (1) an den Träger (29) zum Ausbilden eines trägerseitigen Spannwiderlagers und mit einem Stützwiderlager,
- ein Klemmelement (3), das gegenüber dem Anschlussteil (2) einrichtbar ist, mit einem einen Klemmfortsatz (21) zur Anlage an einem zu befestigenden Paneel (30) aufweisenden Klemmschenkel (18) und mit einem Stützschenkel (19) zum Abstützen des Klemmelements (3) auf dem Stützwiderlager des Anschlussteils (2), wobei der Klemmfortsatz (21) dem Stützschenkel (19) gegenüberliegend angeordnet ist und
- eine Spanneinrichtung (4, 5) mit einem den Klemmschenkel (18) durchgreifenden und darauf abgestützten Spannmittel (4) zum Einrichten des Klemmelementes (3) mit dem Anschlussteil (2)
umfasst, **dadurch gekennzeichnet, dass** das Stützwiderlager des Anschlussteils (2) zumindest zwei mit Abstützflächen (13) in Querrichtung zur Spannwirkrichtung voneinander beabstandete Stützwiderlagerschenkel (8, 8.1) umfasst, wobei die Abstützflächen (13) durch eine Kontur der nach außen weisenden Stirnfläche der Stützwiderlagerschenkel (8, 8.1) bereitgestellt sind und auf welchen Abstützflächen (13) der Stützschenkel (19) des Klemmelementes (3) beim Verspannen des Klemmelementes (3) mit dem Anschlussteil (2) bei auf ein Paneel (30) wirkenden Klemmfortsatz (21) abgestützt ist, dass die Stützwiderlagerschenkel (8, 8.1) des Anschlussteils (2) durch einen der Längserstreckung desselben folgenden Materialstreifen (10, 10.1) miteinander verbunden und Teil eines sich in Spannwirkrichtung erstreckenden Schenkels (6, 6.1) des Anschlussteils (2) sind, welcher Schenkel (6, 6.1) mit einem quer dazu angeordneten Spannwiderlagerschenkel (7, 7.1), auf den beim Verspannen des Klemmelementes (3) mit dem Anschlussteil (2) das Spannmittel (4, 5) wirkt, ein Winkelstück bildet, und dass der Schenkel (6) in seinem von dem Spannwiderlagerschenkel (7) wegweisenden Endabschnitt zumindest ein erstes Anschlussorgan (9) trägt.

2. Befestigungsklemme nach Anspruch 1, **dadurch gekennzeichnet, dass** der Spannwiderlagerschenkel (7, 7.1) des Anschlussteils (2.1) einen mit einem Innengewinde ausgerüsteten Durchzug aufweist, dessen Innengewinde von einem Gewindeschaft (11, 11.1) eines als Spannmittel eingesetzten Spannbolzens (4) gekämmt wird.

3. Befestigungsklemme nach Anspruch 1, **dadurch gekennzeichnet, dass** das Anschlussteil (2) zwischen seinem Spannwiderlagerschenkel (7) und seinen Stützwiderlagerschenkeln (8, 8.1) eine Spannmutteraufnahme (14) durch eine Ausformung des zumindest einen Schenkels (6, 6.1) aufweist, in welcher Spannmutteraufnahme (14) eine darin eingesetzte Spannmutter (5) drehfest aufgenommen ist.

4. Befestigungsklemme nach einem der Ansprüche 1 bis 3, **dadurch gekennzeichnet, dass** die Abstützflächen (13) der Stützwiderlagerschenkel (8, 8.1) in radialer Richtung nach innen von dem Klemmelement (3) wegweisend geneigt sind.

5. Befestigungsklemme nach einem der Ansprüche 1 bis 4, **dadurch gekennzeichnet, dass** die Stützwiderlagerschenkel (8, 8.1) jeweils über mehrere in Spannwirkrichtung voneinander beabstandete Abstützflächen (13) verfügen.

6. Befestigungsklemme nach Anspruch 5, **dadurch gekennzeichnet, dass** die Abstützflächen (13) durch die dem zumindest einen Anschlussorgan (9, 9.1) nähere Flanke einer in die Stützwiderlagerschenkel (8, 8.1) eingebrachten Zahnung bereitgestellt sind.

7. Befestigungsklemme nach einem der Ansprüche 1 bis 6, **dadurch gekennzeichnet, dass** das Anschlussteil (2) zwei Stützwiderlagerschenkel (8, 8.1) umfasst, die winklig zueinander angeordnet sind.

8. Befestigungsklemme nach Anspruch 7, **dadurch gekennzeichnet, dass** der von den Stützwiderlagerschenkeln (8, 8.1) eingeschlossene Winkel zwischen 80° und 110°, insbesondere 90° oder etwa 90° beträgt.

9. Befestigungsklemme nach einem der Ansprüche 1 bis 8, **dadurch gekennzeichnet, dass** das Anschlussteil (2, 2.1) in Querrichtung zur Spannwirkrichtung einen von dem Schenkel (6) als ersten Schenkel (6) beabstandeten und durch den Spannwiderlagerschenkel (7, 7.1) mit dem ersten Schenkel (6) verbundenen zweiten, zumindest ein weiteres Anschlussorgan tragenden Schenkel (6.1) aufweist.

10. Befestigungsklemme nach Anspruch 9, **dadurch gekennzeichnet, dass** der zweite Schenkel (6.1) spiegelsymmetrisch in Bezug auf die sich zwischen den Schenkeln (6, 6.1) befindliche virtuelle Mittellängsebene zu dem ersten Schenkel (6) ausgeführt ist.

11. Befestigungsklemme nach einem der Ansprüche 1 bis 10, **dadurch gekennzeichnet, dass** das Anschlussteil (2, 2.1) als Stanzbiegeteil ausgeführt ist.

12. Befestigungsklemme nach einem der Ansprüche 1 bis 11, **dadurch gekennzeichnet, dass** der Klemmschenkel (18) zwei weitere Klemmfortsätze (22, 22.1) zum Bereitstellen von mit dem trägerseitigen Spannwiderlager zusammenwirkenden paneelseitigen Spannwiderlagern aufweist, wobei die beiden weiteren Klemmfortsätze (22, 22.1) in Querrichtung zu dem ersten Klemmfortsatz (21) an aneinander gegenüberliegenden Seiten des Klemmschenkels (18) angeformt sind.

13. Befestigungsklemme nach Anspruch 12, **dadurch gekennzeichnet, dass** der Abstand der Kontaktflächen (25, 25.1), mit dem die beiden weiteren Klemmfortsätze (22, 22.1) auf einem Paneel wirken, von dem Klemmschenkel (18) sich in Richtung zum Stützschenkel (19) hin vergrößert.

14. Befestigungsklemme nach einem der Ansprüche 1 bis 13, **dadurch gekennzeichnet, dass** der Stützschenkel (19) des Klemmelementes (3) als Endabschnitt einen in Richtung zu dem Anschlussteil (2) abgekanteten Stützabschnitt (27) aufweist, mit dessen von dem Klemmschenkel (3) wegweisenden freien Ende er auf den Abstützflächen (13) zweier voneinander beabstandeter Stützwiderlagerschenkel abgestützt ist.

15. Befestigungsklemme nach einem der Ansprüche 1 bis 14, **dadurch gekennzeichnet, dass** der Stützschenkel (19) und/oder Klemmschenkel (18) mit seinem zumindest einem Klemmfortsatz (21, 22, 22.1) durch jeweils zumindest eine sickenartige Verprägung (24, 26) und/oder durch eine randliche Abkantung versteift sind.

16. Befestigungsklemme nach einem der Ansprüche 1 bis 15, **dadurch gekennzeichnet, dass** der zumindest eine Klemmfortsatz (21, 22, 22.1) in seinen über den Rand eines Paneels (30, 30.1) greifenden Eckbereichen jeweils eine in Richtung zu dem Anschlussteil (2) weisende Eckverprägung zum Bereitstellen einer Eindrückkralle (23) aufweist.

## Claims

1. A fastening clamp for fastening a panel (30, 30.1), for example a photovoltaic module, to a support (29), said fastening clamp (1, 1.1) comprising
- a connecting part (2, 2.1) with a connecting member (9, 9.1) for connecting the fastening clamp (1) to the support (29) for forming a clamping abutment on the support side and with a supporting abutment,
- a clamping element (3), which can be set up with respect to the connecting part (2), having a clamping leg (18) having a clamping extension (21) for bearing against a panel (30) to be fastened and having a supporting leg (19) for supporting the clamping element (3) on the supporting abutment of the connecting part (2), the clamping extension (21) being arranged opposite the supporting leg (19), and
- a clamping device (4, 5) with a clamping means (4), which passes through the clamping leg (18) and is supported thereon, for setting the clamping element (3) with the connecting part (2)
**characterized in that** the supporting abutment of the connecting part (2) comprises at least two supporting abutment legs (8, 8.1) spaced apart from one another by supporting surfaces (13) in the transverse direction to the clamping action direction, wherein the supporting surfaces (13) are provided by a contour of the outwardly pointing end face of the supporting abutment legs (8, 8.1) and on which supporting surfaces (13) the supporting leg (19) of the clamping element (3) is supported when the clamping element (3) is clamped to the connecting part (2) when the clamping extension (21) acts on a panel (30), **in that** the supporting abutment legs (8, 8.1) of the connecting part (2) are connected to one another by a strip of material following the longitudinal extension thereof (10, 10.1) and are part of a leg (6, 6.1) of the connecting part (2) which extends in the clamping action direction and which leg (6, 6.1) forms an angle piece with a clamping abutment leg (7, 7.1) which is arranged transversely thereto and on which the clamping means (4, 5) acts when the clamping element (3) is clamped to the connecting part (2), and **in that** the leg (6) carries at least one first connecting element (9) in its end section pointing away from the clamping abutment leg (7).

2. The fastening clamp according to claim 1, **characterized in that** the clamping abutment leg (7, 7.1) of the connecting part (2.1) has a passage which is provided with an internal thread and the internal thread of which meshes with a threaded shank (11, 11.1) of a clamping bolt (4) inserted as clamping means.

3. The fastening clamp according to claim 1, **characterized in that** the connecting part (2) has, between its clamping abutment leg (7) and its supporting abutment legs (8, 8.1), a clamping-nut receptacle (14) through a shaping of the at least one leg (6, 6.1), in which clamping-nut receptacle (14) a clamping nut (5) inserted therein is received in a rotationally fixed manner.

4. The fastening clamp according to any one of claims 1 to 3, **characterized in that** the supporting surfaces (13) of the supporting abutment legs (8, 8.1) are inclined in the radial direction inwards away from the clamping element (3).

5. The fastening clamp according to any one of claims 1 to 4, **characterized in that** the supporting abutment legs (8, 8.1) each have a plurality of supporting surfaces (13) spaced apart from one another in the clamping-action direction.

6. The fastening clamp according to claim 5, **characterized in that** the supporting surfaces (13) are provided by the flank, which is closer to the at least one connecting element (9, 9.1), of a toothing which is introduced into the supporting abutment legs (8, 8.1).

7. The fastening clamp according to any one of claims 1 to 6, **characterized in that** the connecting part (2) comprises two supporting abutment legs (8, 8.1) which are arranged at an angle to one another.

8. The fastening clamp according to claim 7, **characterized in that** the angle enclosed by the supporting abutment legs (8, 8.1) is between 80° and 110°, in particular 90° or approximately 90°.

9. The fastening clamp according to any one of claims 1 to 8, **characterized in that** the connecting part (2, 2.1) has, in the transverse direction to the clamping-action direction, a second leg (6.1) which is spaced apart from the leg (6) as first leg (6) and is connected to the first leg (6) by the clamping abutment leg (7, 7.1) and carries at least one further connecting element.

10. The fastening clamp according to claim 9, **characterized in that** the second leg (6.1) is designed to be mirror-symmetrical with respect to the virtual central longitudinal plane located between the legs (6, 6.1) relative to the first leg (6).

11. The fastening clamp according to any one of claims 1 to 10, **characterized in that** the connecting part (2, 2.1) is designed as a stamped and bent part.

12. The fastening clamp according to any one of claims 1 to 11, **characterized in that** the clamping leg (18) has two further clamping extensions (22, 22.1) for providing clamping abutments on the panel side which interact with the clamping abutment on the support side, wherein the two further clamping extensions (22, 22.1) are integrally formed on mutually opposite sides of the clamping leg (18) in the transverse direction to the first clamping extension (21).

13. The fastening clamp according to claim 12, **characterized in that** the distance of the contact surfaces (25, 25.1), with which the two further clamping extensions (22, 22.1) act on a panel, increases from the clamping leg (18) in the direction of the supporting leg (19).

14. The fastening clamp according to any one of claims 1 to 13, **characterized in that** the supporting leg (19) of the clamping element (3) has, as end section, a supporting portion (27) which is bent in the direction of the connecting part (2) and, with the free end of which pointing away from the clamping leg (3) it is supported on the supporting surfaces (13) of two supporting abutment legs which are spaced apart from one another.

15. The fastening clamp according to any one of claims 1 to 14, **characterized in that** the supporting leg (19) and/or clamping leg (18) are stiffened with its at least one clamping extension (21, 22, 22.1) by at least one respective bead-like embossing (24, 26) and/or by a folded edge.

16. The fastening clamp according to any one of claims 1 to 15, **characterized in that** the at least one clamping extension (21, 22, 22.1) has, in its corner regions which engage over the edge of a panel (30, 30.1), a respective corner stamping, pointing in the direction of the connecting part (2), for providing a pressed claw (23).

## Revendications

1. Pince de fixation pour fixer un panneau (30, 30.1), tel qu'un module photovoltaïque, à un support (29), laquelle pince de fixation (1, 1.1) comprend
- une pièce de raccordement (2, 2.1) avec un organe de raccordement (9, 9.1) pour le raccordement de la pince de fixation (1) au support (29) pour la formation d'une butée de serrage côté support et avec une butée d'appui,
- un élément de serrage (3), qui peut être agencé par rapport à la pièce de raccordement (2), avec une branche de serrage (18) présentant un prolongement de serrage (21) destiné à venir en appui contre un panneau (30) à fixer, et avec une branche d'appui (19) destinée à soutenir l'élément de serrage (3) sur la butée d'appui de la pièce de raccordement (2), dans laquelle le prolongement de serrage (21) est disposé à l'opposé de la branche d'appui (19), et
- un dispositif de serrage (4, 5) avec un moyen de serrage (4) traversant la branche de serrage (18) et prenant appui sur celle-ci, pour régler l'élément de serrage (3) avec la pièce de raccordement (2)
**caractérisée en ce que** la butée d'appui de la pièce de raccordement (2) comprend au moins deux branches de butée d'appui (8, 8.1) espacées l'une de l'autre avec des surfaces d'appui (13) dans la direction transversale à la direction d'action de serrage, dans laquelle les surfaces d'appui (13) sont formées par un contour de la face d'extrémité tournée vers l'extérieur des branches de butée d'appui (8, 8.1) et sur lesquelles surfaces d'appui (13) la branche d'appui (19) de l'élément de serrage (3) est supportée lorsque l'élément de serrage (3) est serré sur la pièce de raccordement (2) avec le prolongement de serrage (21) agissant sur un panneau (30), **en ce que** les branches de butée d'appui (8, 8.1) de la pièce de raccordement (2) sont reliées entre elles par une bande de matériau (10, 10.1) suivant son extension longitudinale et font partie d'une branche (6, 6.1) de la pièce de raccordement (2) s'étendant dans la direction d'action de serrage, laquelle branche (6, 6.1) forme une pièce d'angle avec une branche de butée de serrage (7, 7.1) disposée transversalement à celle-ci, sur laquelle agit le moyen de serrage (4, 5) lorsque l'élément de serrage (3) est serré sur la pièce de raccordement (2), et **en ce que** la branche (6) porte au moins un premier organe de raccordement (9) dans sa section d'extrémité dirigée à l'opposé de la branche de butée de serrage (7).

2. Pince de fixation selon la revendication 1, **caractérisée en ce que** la branche de butée de serrage (7, 7.1) de la pièce de raccordement (2.1) présente un passage muni d'un filetage intérieur, dont le filetage intérieur est peigné par une tige filetée (11, 11.1) d'un boulon de serrage (4) utilisé comme moyen de serrage.

3. Pince de fixation selon la revendication 1, **caractérisée en ce que** la pièce de raccordement (2) présente, entre sa branche de butée de serrage (7) et ses branches de butée d'appui (8, 8.1), un logement d'écrou de serrage (14) par une déformation de l'au moins une branche (6, 6.1), logement d'écrou de serrage (14) dans lequel un écrou de serrage (5) inséré dans celui-ci est reçu de manière solidaire en rotation.

4. Pince de fixation selon l'une des revendications 1 à 3, **caractérisée en ce que** les surfaces d'appui (13) des branches de butée d'appui (8, 8.1) sont inclinées dans la direction radiale vers l'intérieur en s'éloignant de l'élément de serrage (3).

5. Pince de fixation selon l'une des revendications 1 à 4, **caractérisée en ce que** les branches de butée d'appui (8, 8.1) disposent chacune de plusieurs surfaces d'appui (13) espacées les unes des autres dans la direction d'action de serrage.

6. Pince de fixation selon la revendication 5, **caractérisée en ce que** les surfaces d'appui (13) sont prévues par le flanc d'une denture introduite dans les branches de butée d'appui (8, 8.1), lequel flanc est plus proche de l'au moins un organe de raccordement (9, 9.1).

7. Pince de fixation selon l'une des revendications 1 à 6, **caractérisée en ce que** la pièce de raccordement (2) comprend deux branches de butée d'appui (8, 8.1) qui sont disposées angulairement l'une par rapport à l'autre.

8. Pince de fixation selon la revendication 7, **caractérisée en ce que** l'angle formé par les branches de butée d'appui (8, 8.1) est compris entre 80° et 110°, en particulier de 90° ou d'environ 90°.

9. Pince de fixation selon l'une des revendications 1 à 8, **caractérisée en ce que** la pièce de raccordement (2, 2.1) présente, dans la direction transversale à la direction d'action de serrage, une seconde branche (6.1), espacée de la branche (6) en tant que première branche (6) et reliée par la branche de butée de serrage (7, 7.1) à la première branche (6), portant au moins un autre organe de raccordement.

10. Pince de fixation selon la revendication 9, **caractérisée en ce que** la seconde branche (6.1) est réalisée symétriquement par rapport au plan longitudinal médian virtuel se trouvant entre les branches (6, 6.1) par rapport à la première branche (6).

11. Pince de fixation selon l'une des revendications 1 à 10, **caractérisée en ce que** la pièce de raccordement (2, 2.1) est réalisée sous la forme d'une pièce découpée et pliée.

12. Pince de fixation selon l'une des revendications 1 à 11, **caractérisée en ce que** la branche de serrage (18) présente deux autres prolongements de serrage (22, 22.1) pour la mise à disposition de butées de serrage côté panneau coopérant avec la butée de serrage côté support, dans laquelle les deux autres prolongements de serrage (22, 22.1) sont formés dans la direction transversale par rapport au premier prolongement de serrage (21) sur des côtés opposés l'un à l'autre de la branche de serrage (18).

13. Pince de fixation selon la revendication 12, **caractérisée en ce que** la distance entre les surfaces de contact (25, 25.1), avec laquelle les deux prolongements de serrage supplémentaires (22, 22.1) agissent sur un panneau, augmente à partir de la branche de serrage (18) en direction de la branche d'appui (19).

14. Pince de fixation selon l'une des revendications 1 à 13, **caractérisée en ce que** la branche d'appui (19) de l'élément de serrage (3) présente, en tant que section d'extrémité, une section d'appui (27) repliée en direction de la pièce de raccordement (2), dont l'extrémité libre éloignée de la branche de serrage (3) prend appui sur les surfaces d'appui (13) de deux branches de butée d'appui espacées l'une de l'autre.

15. Pince de fixation selon l'une quelconque des revendications 1 à 14, **caractérisée en ce que** la branche d'appui (19) et/ou la branche de serrage (18) sont rigidifiées par son au moins un prolongement de serrage (21, 22, 22.1) par au moins une empreinte en forme de moulure (24, 26) et/ou par un rebord marginal.

16. Pince de fixation selon l'une des revendications 1 à 15, **caractérisée en ce que** l'au moins un prolongement de serrage (21, 22, 22.1) présente, dans ses zones d'angle venant en prise sur le bord d'un panneau (30, 30.1), respectivement une empreinte d'angle orientée en direction de la pièce de raccordement (2) pour la mise à disposition d'une griffe d'enfoncement (23).
